# EUROPÄISCHE PATENTANMELDUNG

(11) **EP 2 685 295 A1**
(43) Veröffentlichungstag der Anmeldung: **15.01.2014**
(21) Anmeldenummer: 12405062.6
(22) Anmeldetag: 10.07.2012
(51) Int. Cl.: G02B 6/00, F21S 8/06, F21V 7/00

(54) **Seitliche Lichteinspeisung**

(71) Anmelder: Belux IP AG, 4127 Birsfelden (CH)
(72) Erfinder: Lazlo, Mirocha, 5742 Kölliken (CH)
(74) Vertreter: Rüfenacht, Philipp Michael

(57) **Zusammenfassung**

Eine Leuchte (L), insbesondere eine Pendelleuchte zur Beleuchtung von Arbeitsplätzen, umfasst eine Leuchtdiode (6) und eine Lichtleiterplatte (1), umfassend eine Kante geeignet zur Einkopplung eines Lichtstroms, der durch die Leuchtdiode (6) erzeugt wurde, wobei die Lichtleiterplatte (1) eine Mehrzahl an Strukturelementen (7.1, 7.3) zur Erzeugung einer gewünschten Lichtverteilung umfasst. Die Leuchte (L) umfasst des Weiteren auf einer ersten Seite der Lichtleiterplatte (1) ein Entblendungselement (2) und auf einer zweiten Seite der Lichtleiterplatte (1) ein Diffusorelement (3).

## Beschreibung

### Technisches Gebiet

Die Erfindung betrifft eine Leuchte, insbesondere eine Pendelleuchte zur Beleuchtung von Arbeitsplätzen, mit einer Leuchtdiode und einer Lichtleiterplatte, umfassend eine Kante geeignet zur Einkopplung eines Lichtstroms, der durch die Leuchtdiode erzeugt wurde, wobei die Lichtleiterplatte eine Mehrzahl an Strukturelementen zur Erzeugung einer gewünschten Lichtverteilung umfasst. Die Erfindung betrifft ferner ein Verfahren zur Beleuchtung eines Raumes.

### Stand der Technik

Leuchtdioden kommen neben Anwendungen in der Signal- und Bildschirmtechnik auch immer öfter in Beleuchtungsanwendungen, z. B. bei der Beleuchtung von Räumen, zum Einsatz. Innenraum-Beleuchtungsszenarien müssen unterschiedlichen Qualitätsanforderungen genügen. Speziell Beleuchtungsszenarien in Büroräumen sollten z. B. möglichst energieeffizient sein, möglichst hohe Beleuchtungsstärken auf Arbeitsflächen garantieren und gleichzeitig möglichst komfortable Lichtstärkeverteilungen auf Decken und Wänden der Büroräume gewährleisten. Am Markt verfügbare Pendelleuchten sind grösstenteils für die Bestückung mit Leuchtstoffrören oder Halogenlampen konzipiert. Sie eignen sich nicht zum Einbau von Leuchtdioden, hauptsächlich weil sie von ihrer konstruktionsbedingten Strahlenführung her nicht geeignet sind, komfortable Beleuchtungsszenarien bei maximaler Energieeffizienz zu erzeugen.

In der DE 102010001499 A1 ist eine beleuchtete Gepäckablage mit Leuchtdioden gezeigt. Diese Gepäckablage umfasst eine Acrylglasschicht, welche zwischen zwei Glasschichten eingefasst ist. In Kanten der Acrylglasschicht kann von Leuchtdioden Licht eingespeist werden, welches durch beide Glasschichten hindurch aus der Gepäckablage herausdringen kann. Die DE 102010001499 A1 offenbart in diesem Zusammenhang die Verwendung einer Vielzahl kleiner Streukörper, die das Licht in den Fahrgastraum streuen, und sich zum Erzeugen einer vorteilhaften direkten Lichtverteilung eignen. Nachteilig bei der in der DE 102010001499 A1 beschriebenen Leuchte ist jedoch, dass sie sich zwar zur Erzeugung einer Effektbeleuchtung, nicht aber zur energieeffizienten, komfortablen und normgerechten Beleuchtung von Arbeitsplätzen eignet.

### Darstellung der Erfindung

Aufgabe der Erfindung ist es, eine dem eingangs genannten technischen Gebiet zugehörende Leuchte zu schaffen, welche einen möglichst hohen Leuchtenwirkungsgrad hat (also möglichst energieeffizient ist), und welche in der Lage ist, in einem Raum eine möglichst komfortable Beleuchtungssituation zu erzeugen.

Die Lösung der Aufgabe ist durch die Merkmale des Anspruchs 1 definiert. Gemäss der Erfindung umfasst eine Leuchte, insbesondere eine Pendelleuchte zur Beleuchtung von Arbeitsplätzen, eine Leuchtdiode und eine Lichtleiterplatte, wobei die Lichtleiterplatte eine Kante aufweist, die geeignet ist zur Einkopplung eines Lichtstroms, der durch die Leuchtdiode erzeugt wurde. Die Lichtleiterplatte umfasst eine Mehrzahl an Strukturelementen zur Erzeugung einer gewünschten Lichtverteilung. Auf einer ersten Seite der Lichtleiterplatte ist zudem ein Entblendungselement und auf einer zweiten (der ersten Seite gegenüberliegenden) Seite der Lichtleiterplatte ein Diffusorelement angeordnet. Die Strukturelemente sind dabei typischerweise geeignet, zumindest auf der ersten Seite der Lichtleiterplatte einen Direktlichtstrom mit einer gewünschten Verteilung zu erzeugen.

Eine solche Leuchte hat den Vorteil, dass durch die kantenseitige Lichtstromeinkopplung in die Lichtleiterplatte in Kombination mit den Strukturelementen der Lichtleiterplatte eine besonders günstige und effiziente Aufteilung des Lichtstroms in Richtung des Entblendungselements bzw. des Diffusorelements gelingt. Speziell werden Mehrfachreflexionen innerhalb der Leuchte minimiert und Lichtaustrittswinkel aus der Lichtleiterplatte in Richtung des Entblendungselements werden derart vorgegeben, dass im bzw. am Entblendungselement möglichst keine wesentliche Verringerung des Direktlichtstroms auftritt. Dadurch wird ein hoher Leuchtenwirkungsgrad und eine gute Energieeffizienz der Leuchte erreicht. Zudem wird die Blendgefahr der Leuchte in Richtung eines Betrachters auf der ersten Seite der Lichtleiterplatte durch die Entblendungsstruktur reduziert und die Lichtverteilung auf der zweiten Seite der Lichtleiterplatte wird homogenisiert, so dass z. B. eine gleichmässige Ausleuchtung von Decken oder Wänden ohne störende dunkle Bereiche ermöglicht wird.

Bei einem erfindungsgemässen Verfahren zur Beleuchtung eines Raumes wird typischerweise ein Lichtstrom mit Hilfe einer Leuchtdiode erzeugt. Der Lichtstrom wird zumindest teilweise in eine Kante einer im Wesentlichen horizontal orientierten Lichtleiterplatte eingekoppelt. Ein Direktlichtstrom wird aus einer Unterseite der Lichtleiterplatte ausgekoppelt und ein Indirektlichtstroms wird aus einer Oberseite der Lichtleiterplatte ausgekoppelt, wobei der Direktlichtstrom und/oder der Indirektlichtstrom zumindest teilweise mit einem Strukturelement der Lichtleiterplatte interagiert. Weiter wird der Direktlichtstroms mit Hilfe eines Entblendungselements entblendet, so dass eine Blendgefahr für einen unterhalb des Entblendungselements befindlichen Betrachter reduziert wird. Weiter findet eine Diffusion und/oder Homogenisierung des Indirektlichtstroms mit Hilfe eines Diffusorelements statt, so dass an einer Raumdecke oberhalb des Diffusorelements eine möglichst homogene Leuchtdichteverteilung entsteht.

Bei vorteilhaften Ausführungsformen der erfindungsgemässen Leuchte ist zumindest eines der Strukturelemente im Wesentlichen halbkugelförmig. Bei typischen Ausführungsformen sind alle Strukturelemente im Wesentlichen halbkugelförmig.

Bei vorteilhaften Ausführungsformen ist zumindest eines der Strukturelemente im Wesentlichen kegelförmig. Bei typischen Ausführungsformen sind alle Strukturelemente im Wesentlichen kegelförmig.

Bei vorteilhaften Ausführungsformen ist zumindest eines der Strukturelemente im Wesentlichen pyramidenförmig. Bei typischen Ausführungsformen sind alle Strukturelemente im Wesentlichen pyramidenförmig.

Bei vorteilhaften Ausführungsformen ist zumindest eines der Strukturelemente im Wesentlichen prismenförmig. Bei typischen Ausführungsformen sind alle Strukturelemente im Wesentlichen prismenförmig.

Bei typischen Ausführungsformen umfasst die Lichtleiterplatte eine Kombination aus halbkugelförmigen und/oder kegelförmigen und/oder pyramidenförmigen und/oder prismenförmigen Strukturelementen. Besonders vorteilhaft ist es, wenn die Strukturelemente zumindest zum Teil gruppenweise, d. h. in Gruppen im Wesentlichen gleich geformter Strukturelemente, angeordnet sind. Alternativ dazu ist es auch möglich, unterschiedlich geformte Strukturelemente durchmischt in bzw. auf der Lichtleiterplatte anzuordnen. Auch ist es natürlich möglich, dass zumindest ein Strukturelement eine andere als die genannten geometrischen Formen hat, solange das Strukturelement geeignet ist, den in die Lichtleiterplatte eingekoppelten Lichtstrom zumindest teilweise auf eine vorteilhafte Weise zu beeinflussen, also beispielsweise Mehrfachreflexionen im Innern der Lichtleiterplatte zu verringern, das Verhältnis zwischen Direkt- und Indirektlichtstrom zu beeinflussen oder dazu beizutragen, die Lichtaustrittswinkel der Teillichtströme aus der ersten Seite und/oder der zweiten Seite der Lichtleiterplatte genau zu definieren.

Bei vorteilhaften Ausführungsformen ist das Entblendungselement im Wesentlichen plattenförmig. Bei vorteilhaften Ausführungsformen ist das Diffusorelement im Wesentlichen plattenförmig. Das plattenförmige Element ist dabei jeweils parallel zur Hauptfläche der Lichtleiterplatte angeordnet. Diese Bauform des Entblendungselements und/oder des Diffusorelements hat den Vorteil, dass eine kompakte Bauform der Leuchte sowie ein besonders guter Leuchtenwirkungsgrad erreicht werden. Es ist jedoch auch denkbar, dass das Entblendungselement und/oder das Diffusorelement anders geformt sind, beispielsweise zumindest teilweise wellenförmig oder zumindest teilweise faltig. Auf diese Weise könnten z. B. besondere ästhetische Effekte oder besondere Lichtverteilungseffekte erzielt werden. Besonders vorteilhaft ist es, wenn das Entblendungselement und/oder das Diffusorelement im Wesentlichen die gleiche geometrische Fläche wie die Lichtleiterplatte hat, also im Wesentlichen gleich breit und gleich lang wie die Lichtleiterplatte ist. Bei typischen Ausführungsformen haben die Lichtleiterplatte und/oder das Diffusorelement und/oder das Entblendungselement eine Breite und/oder eine Länge zwischen 5 cm und 130 cm, bevorzugt zwischen 15 cm und 100 cm, besonders bevorzugt zwischen 70 cm und 25 cm.

Bei vorteilhaften Ausführungsformen ist zumindest eines der Strukturelemente auf der ersten Seite der Lichtleiterplatte angeordnet. Besonders vorteilhaft ist es, wenn im Wesentlichen alle Strukturelemente auf der ersten Seite der Lichtleiterplatte angeordnet sind. Dies hat den Vorteil, dass der Direktlichtstrom besonders vorteilhaft, insbesondere besonders gleichmässig und typischerweise mit möglichst parallel verlaufenden Strahlen, zu dem Entblendungselement hin gerichtet wird.

Bei vorteilhaften Ausführungsformen ist zumindest eines der Strukturelemente auf der zweiten Seite der Lichtleiterplatte angeordnet. Bei typischen Ausführungsformen sind im Wesentlichen alle Strukturelemente auf der zweiten Seite der Lichtleiterplatte angeordnet, Dies ist beispielsweise in Fällen, bei denen eine vorteilhafte Verteilung eines Indirektlichtstroms zu dem Diffusorelement hin besonders wünschenswert ist, von Vorteil.

Bei typischen Ausführungsformen sind sowohl auf der ersten als auch auf der zweiten Seite der Lichtleiterplatte Strukturelemente angeordnet. Bei weiteren Ausführungsformen sind Strukturelemente innerhalb der Lichtleiterplatte angeordnet.

Bei besonders vorteilhaften Ausführungsformen umfasst zumindest eines der Strukturelemente eine offene Grundfläche, wobei eine Flächennormale der Grundfläche im Wesentlichen parallel zu einer Flächennormalen des Diffusorelements und/oder im Wesentlichen parallel zu einer Flächennormalen des Entblendungselements verläuft. "Offene Grundfläche" ist in diesem Zusammenhang so zu verstehen, dass die Strukturelemente Vertiefungen sind, welche in die Oberfläche der ersten Seite der Lichtleiterplatte und/oder in die Oberfläche der zweiten Seite der Lichtleiterplatte eingebracht, beispielsweise eingeprägt sind. Halbkugel- und pyramidenförmige Strukturelemente umfassen dabei kreisförmige offene Grundflächen, pyramiden- und prismenförmige Strukturelemente umfassen dabei viereckige, insbesondere rechteckige, mit Vorteil quadratische offene Grundflächen, von welchen aus sich die Strukturelemente in Form von einseitig offenen Hohlräumen bzw. Sacklöchern in die Lichtleiterplatte hinein erstrecken. Alternativ zu solchen eingeprägten Strukturelementen ist es auch möglich, dass die Lichtleiterplatte aufgeprägte Strukturelemente umfasst, welche von der Lichtleiterplatte abragen. Auch eine Kombination aus ein- und aufgeprägten Strukturelementen ist möglich.

Bei typischen Ausführungsformen hat die offene Grundfläche eine geometrische Fläche zwischen 10 µm² und 2500 mm², bevorzugt zwischen 10 µm² und 100 mm², besonders bevorzugt zwischen 10 µm² und 25 mm². Versuche haben gezeigt, dass Strukturelemente mit derartigen offenen Grundflächen besonders geeignet sind, vorteilhafte Strahlenumlenkungen zu erzeugen.

Bei vorteilhaften Ausführungsformen sind die Strukturelemente in einem gleichmässigen Gitter auf der Lichtleiterplatte angeordnet. Dabei bedeutet gleichmässig, dass alle Gitterpunkte im Wesentlichen gleiche Abstände voneinander haben. Dies hat einen fertigungstechnischen Vorteil, denn auf diese Weise können mehrere Lichtleiterplatten aus einem Lichtleiterplattenbogen mit mehreren Metern Kantenlänge ausgeschnitten werden, wobei es nicht darauf ankommt, an welchen Stellen genau geschnitten wird. Alternativ dazu ist es aber auch möglich, dass die Strukturelemente in einem zumindest teilweise ungleichmässigen Gitter auf der Lichtleiterplatte angeordnet sind oder dass die Lichtleiterplatte mehrere Bereiche mit jeweils einem gleichmässigen Gitter von Strukturelementen umfasst. Letzteres ermöglicht eine Definition von entsprechend mehreren in einer gewünschten Weise beleuchteten Raumbereichen.

Bei vorteilhaften Ausführungsformen haben zumindest zwei benachbarte Strukturelemente einen Abstand zwischen 0,1 mm und 10mm, bevorzugt zwischen 0,2mm und 5mm, besonders bevorzugt zwischen 0,5mm und 2mm, voneinander. Versuche haben gezeigt, dass derartige Abstände zwischen den Strukturelementen besonders geeignet sind, vorteilhafte Strahlenumlenkungen zu erzeugen.

Bei typischen Ausführungsformen umfasst die Leuchte ein Leuchtdiodenband, welches seinerseits die Leuchtdiode umfasst. Ein solches Leuchtdiodenband umfasst typischerweise 2 bis 50, bevorzugt 4 bis 25, besonders bevorzugt 5 bis 15 Leuchtdioden. Die Verwendung eines Leuchtdiodenbands ist deswegen vorteilhaft, weil auf diese Weise Kanten von Lichtleiterplatten von zumindest einigen Hundert Millimetern Länge im Wesentlichen homogen beleuchtet werden können. Besonders vorteilhaft ist es, wenn die Leuchte eine Mehrzahl an Leuchtdiodenbändern umfasst, welche Lichtströme in unterschiedliche, bevorzugt gegenüberliegende, Kanten der Lichtleiterplatte einspeisen.

Bei besonders vorteilhaften Ausführungsformen umfasst die Leuchte auf einer der Kante abgewandten Seite der Leuchtdiode einen Spiegel, wobei der Spiegel vorteilhafterweise zumindest teilweise gerundet ist. Bei typischen Ausführungsformen ist der Spiegel ein Rinnenspiegel, bevorzugt ein im wesentlichen parabolischer Rinnenspiegel, welcher sich typischerweise im Wesentlichen über die gesamte Länge zumindest einer Kante der Lichtleiterplatte erstreckt. Ein solcher Rinnenspiegel ist typischerweise geeignet, die Lichtströme aller Leuchtdioden eines Leuchtdiodenbands zu der entsprechenden Kante der Lichtleiterplatte hin zu richten. Es ist jedoch auch möglich, dass jede Leuchtdiode ihren eigenen Spiegel, bevorzugt Hohlspiegel, hat, so dass der Lichtstrom jeder Leuchtdiode von jeweils einem separaten Spiegel in Richtung der entsprechenden Kante der Lichtleiterplatte gerichtet wird. Besonders vorteilhaft ist es, wenn der Spiegel nach den Gesetzen der non-imaging optics-Theorie geformt ist, sodass Verluste bei der Umlenkung von Lichtstrahlen durch den Spiegel soweit wie möglich minimiert werden.

Bei typischen Ausführungsformen umfasst das Entblendungselement loch- und/oder rillenförmige Entblendungsstrukturen. Solche Entblendungsstrukturen haben den Vorteil, dass sie eine besonders gute Entblendung bei weitestgehend gleichbleibendem Lichtstrom bzw. einen sehr guten Wirkungsgrad besitzen. Alternativ dazu ist es natürlich auch möglich, dass das Entblendungselement anders ausgeführt ist; wichtig ist jedoch, dass eine gute Entblendung der Leuchte erreicht wird und dass keine zu hohen Verluste durch das Entblendungselement entstehen.

Bei typischen Ausführungsformen umfasst das Entblendungselement und/oder das Diffusorelement eine diffuse und/oder matte Oberfläche, wobei die Oberfläche vorzugsweise homogen diffus und/oder homogen matt ist. Das hat z. B. den Vorteil, dass eine besonders gleichmässige Lichtstärkeverteilungskurve von dem Diffusorelement erzeugt werden kann, welche zu einer besonders gleichmässigen Beleuchtung von Decken oder Wänden von Räumen genutzt werden kann. Alternativ zu einer homogen diffusen und/oder homogen matten Oberfläche ist es jedoch auch möglich, dass die Oberfläche an einigen Stellen diffuser und/oder matter ist als an anderen Stellen.

Bei typischen Ausführungsformen umfasst die Leuchte einen Trägerrahmen mit jeweils einer Einschubnut für die Lichtleiterplatte und das Entblendungselement und das Diffusorelement. Dies hat den Vorteil, dass die Montage der Leuchte vereinfacht wird, und dass ausserdem Abstände zwischen den einzelnen Komponenten der Leuchte konstant gehalten werden, was unter anderem zur Gewährleistung der gewünschten Eigenschaften der Leuchte vorteilhaft ist. Bei vorteilhaften Ausführungsformen ist der Rahmen mehrteilig, bevorzugt zwei-, drei- oder vierteilig aufgebaut.

Bei vorteilhaften Ausführungsformen ist zwischen der Leichtleiterplatte und dem Entblendungselement und/oder zwischen der Lichtleiterplatte und dem Diffusorelement ein Luftspalt angeordnet. Ein solcher Luftspalt hat typischerweise eine Breite zwischen 0,1 mm und 2 mm, bevorzugt zwischen 0,2 und 1 mm. Ein solcher Luftspalt hat den Vorteil, dass die Strahlengänge der Lichtströme in der Leuchte durch zusätzliche optische Grenzflächen positiv beeinflusst werden. Besonders vorteilhaft ist es, wenn der Luftspalt durch eine Lasche des Trägerrahmens definiert und konstant gehalten wird. Es ist jedoch auch möglich, dass der Luftspalt durch eine auf den Rand der Entblendungsstruktur und/oder auf den Rand der Lichtleiterplatte und/oder auf den Rand der Diffusorstruktur aufgeklebte Folie erzeugt wird.

Bei besonders vorteilhaften Ausführungsformen umfasst die Leuchte ein Kühlelement zur Kühlung der Leuchtdiode und/oder des Leuchtdiodenbands. Eine Kühlung der Leuchtdiode und/oder des Leuchtdiodenbands ist deswegen vorteilhaft, weil sich bei einer zu starken Erwärmung der Leuchtdiode aufgrund von Verschlechterungen der Halbleitereigenschaften des Diodenmaterials der Leuchtdiode und/oder des Leuchtdiodenbands der von der Leuchtdiode und/oder dem Leuchtdiodenband ausgestrahlte Lichtstrom mit der Zeit verringert. Dies wirkt sich negativ auf die Effizienz der Leuchte aus. Zudem kann ein Betrieb bei zu hohen Temperaturen zu einer Verkürzung der Lebensdauer der Leuchtdiode und/oder des Leuchtdiodenbands führen. Das Kühlelement ist vorzugsweise aus Metall, bevorzugt aus Aluminium oder aus einer Aluminiumlegierung. Das Kühlelement umfasst typischerweise eine Mehrzahl an Kühlrippen. Das Kühlelement ist vorteilhafterweise mehrteilig, bevorzugt zweiteilig. Bei vorteilhaften Ausführungsformen umfasst die Leuchte eine Mehrzahl an Kühlelementen, bevorzugt zwei Kühlelemente bzw. je ein Kühlelement pro Leuchtdiodenband.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1:: Eine schematische Schnittansicht eines Teils einer erfindungsgemässen Leuchte;
- Fig. 2:: eine perspektivische Ansicht einer Lichtleiterplatte einer erfindungsgemässen Leuchte;
- Fig. 3:: eine Schnittansicht eines Teils einer erfindungsgemässen Leuchte und
- Fig. 4:: eine perspektivische Ansicht einer erfindungsgemässen Leuchte.

Grundsätzlich sind in den Figuren gleiche Teile mit gleichen Bezugszeichen versehen.

### Wege zur Ausführung der Erfindung

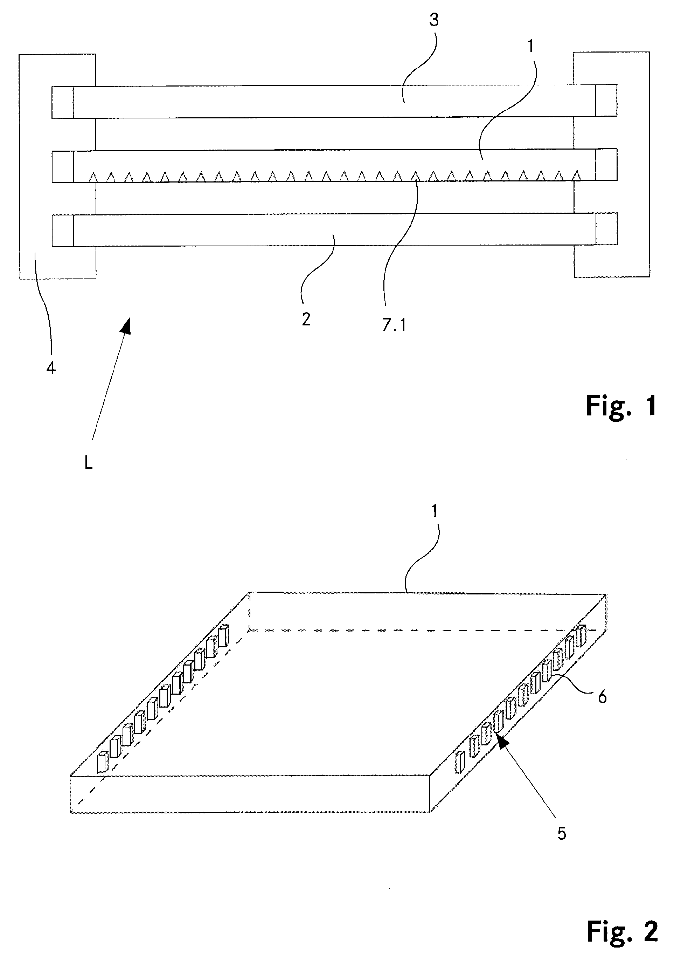

Figur 1 zeigt eine schematische Schnittansicht einer erfindungsgemässen Leuchte L mit einer Lichtleiterplatte 1, einem Entblendungselement 2 auf einer ersten Seite der Lichtleiterplatte 1, einem Diffusorelement 3 auf einer zweiten Seite der Lichtleiterplatte 1 und einem zweiteiligen Trägerrahmen 4. Beide Teile des Trägerrahmens 4 umfassen jeweils eine Einschubnut für die Lichtleiterplatte 1, eine Einschubnut für das Entblendungselement 2 und eine Einschubnut für das Diffusorelement 3. Die Lichtleiterplatte 1, das Entblendungselement 2 und das Diffusorelement 3 sind im Wesentlichen parallel zueinander angeordnet, wobei die Lichtleiterplatte 1, das Entblendungselement 2 und das Diffusorelement 3 plattenförmig sind. Natürlich wäre es ebenso möglich, beispielsweise ein wellenförmiges Diffusorelement 3 vorzusehen. Zwischen der Lichtleiterplatte 1 und dem Entblendungselement 2 sowie zwischen der Lichtleiterplatte 1 und dem Diffusorelement 3 ist jeweils ein Luftspalt angeordnet. Ferner umfasst die in Figur 1 dargestellte Lichtleiterplatte 1 eine Mehrzahl an kegelförmigen Strukturelementen 7.1. Die Darstellung der Leuchte L und speziell der Lichtleiterplatte 1 in Figur 1 ist nicht massstabsgetreu. Die kegelförmigen Strukturelemente 7.1 haben eine Höhe von 0,4 mm und einen offene Grundfläche mit einem Durchmesser von 0,3 mm. Die Strukturelemente 7.1 sind in einem gleichmässigen Raster mit einem Punktabstand von 0.5 mm auf der ersten Seite des Lichtleiterelements 1 angeordnet.

Figur 2 zeigt eine perspektivische Ansicht einer erfindungsgemässen Lichtleiterplatte 1 einer erfindungsgemässen Leuchte L. Die Lichtleiterplatte 1 in Figur 2 umfasst an zwei gegenüberliegenden Kanten jeweils ein Leuchtdiodenband 5 mit jeweils einer Mehrzahl an Leuchtdioden 6. Die Leuchtdioden 6 sind dabei derart angeordnet, dass sie einen Lichtstrom in die Lichtleiterplatte 1 einkoppeln können.

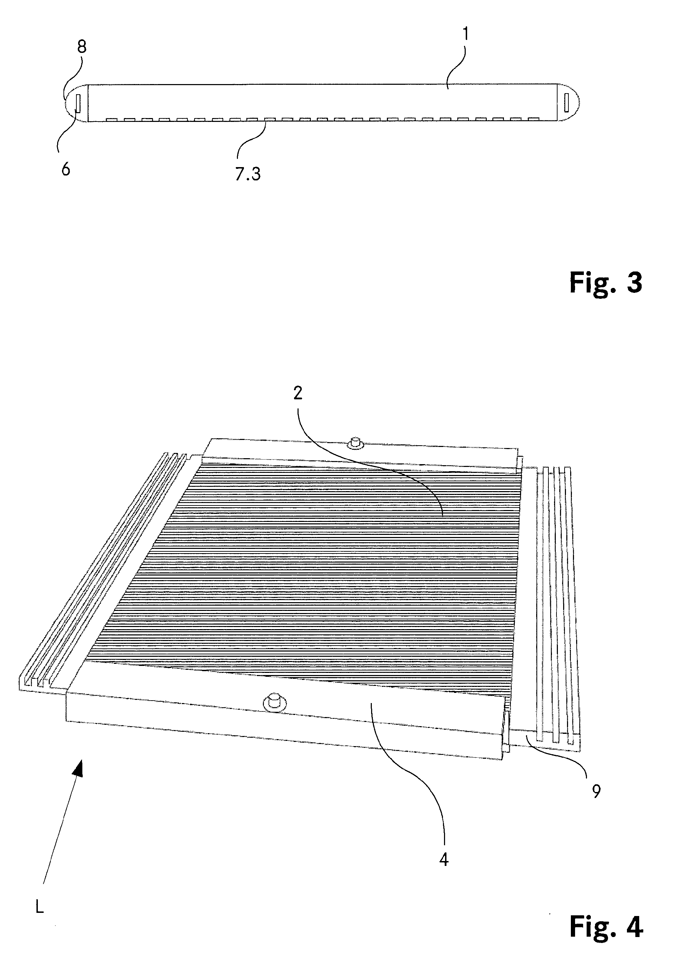

Figur 3 zeigt einen Querschnitt durch eine erfindungsgemässe Lichtleiterplatte 1 einer erfindungsgemässen Leuchte L. Auf ihrer ersten Seite - also auf der Seite des in Figur 3 nicht dargestellten Entblendungselements (siehe Figur 1) - ist eine Mehrzahl an Strukturelementen 7.3 in die Lichtleiterplatte 1 eingeprägt. Die in Figur 3 gezeigten Strukturelemente 7.3 sind - im Gegensatz zu den kegelförmigen Strukturelementen 7.1 in Figur 4 - hohlzylinderförmig. Sie sind bezüglich Figur 3 nach unten hin offen und entsprechen hinsichtlich ihrer Dimensionen im Wesentlichen den in Figur 1 gezeigten Strukturelementen 7.1 Die Strukturelemente müssen nicht unbedingt kegelförmig oder hohlzylinderförmig sein; vielmehr könnten sie z. B. auch halbkugel-, pyramiden-, oder prismenförmig sein. Weiter sind in Figur 3 zwei Leuchtdioden 6 gezeigt, welche geeignet sind, an zwei gegenüberliegenden Kanten der Lichtleiterplatte 1 Lichtströme in die Lichtleiterplatte 1 einzustrahlen. Hinter jeder der Leuchtdioden 6 ist jeweils ein gerundeter Spiegel 8 angeordnet, welcher die Aufgabe hat, von der Leuchtdiode 6 ausgestrahlte Teillichtströme, welche nicht in die jeweilige Kante der Lichtleiterplatte 1 eingestrahlt werden, zu reflektieren und so schliesslich doch der Kante zuzuführen. Eine weitere Aufgabe dieser Spiegel 8 ist es, Teillichtströme, welche über die Kanten die Lichtleiterplatte 1 wieder verlassen, in die Lichtleiterplatte 1 zurückzureflektieren.

Figur 4 zeigt eine perspektivische Ansicht einer erfindungsgemässen Leuchte L mit einem Entblendungselement 2, einem zweiteiligen Trägerrahmen 4 sowie zwei Kühlelementen 9. Das Entblendungselement 2 umfasst eine Vielzahl von Entblendungsstrukturen in Form sehr dünner Rillen bzw. Ritzen mit einer Tiefe von ca. 0,1 bis 0,3 mm und einem Abstand von ca. 0,2 mm, welche das Entblendungselement 2 homogen matt erscheinen lassen und welche beim Betrieb der Leuchte L für eine Entblendung der Leuchte L sorgen. Das Entblendungselement 2 ist typischerweise aus Kunststoff, bevorzugt PMMA. Es kann jedoch auch aus einem anderen Kunststoff oder aus Glas sein. In Figur 4 verdeckt das Entblendungselement 2 die Lichtleiterplatte 1, so dass diese in Figur 4 nicht zu erkennen ist. Auf zwei gegenüberliegenden Seiten der Leuchte L ist das Entblendungselement 2 in jeweils eine Einschubnut (nicht in Figur 4 erkennbar) jeweils eines Teils eines Trägerrahmens 4 eingeschoben. An seinen beiden anderen Seiten ist das Entblendungselement von jeweils einem Kühlelement 9 mit Kühlrippen eingefasst. Auch die Lichtleiterplatte 1 und das Diffusorelement 3 der Leuchte L sind auf jeweils zwei Seiten in entsprechende Einschubnuten der beiden Teile des Trägerrahmens 4 eingeschoben und auf den beiden verbleibenden Seiten von jeweils einem der Kühlelemente 9 eingefasst. Aufgrund der Verdeckung durch das Entblendungselement 2 ist auch dies jedoch nicht in Figur 4 erkennbar. Weiter umfasst die in Figur 4 dargestellte Leuchte L zwei Leuchtdiodenbänder 5, welche jeweils zwischen einem der Kühlelemente 9 und einer entsprechenden Kante der Lichtleiterplatte angeordnet sind und deshalb in Figur 4 ebenfalls nicht erkennbar sind.

Die Funktionsweise der in den Figuren 1 bis 4 dargestellten erfindungsgemässen Leuchte L, welche man sich nun als eine an einer Raumdecke befestigte Pendelleuchte vorstelle, ist wie folgt: Die in zwei Leuchtdiodenbändern 5 angeordneten Leuchtdioden 6 produzieren Einzellichtströme, welche in die entsprechenden beiden Kanten der Lichtleiterplatte 1 eingekoppelt werden. Die Spiegel 8 sorgen dabei dafür, dass alle Teillichtströme im Wesentlichen komplett in die Lichtleiterplatte eingekoppelt werden, und dass Teillichtströme, welche die Lichtleiterplatte 1 über die Kanten wieder verlassen, ebenfalls wieder in die Lichtleiterplatte 1 der Leuchte L eingekoppelt werden. So entsteht in der Lichtleiterplatte 1 ein Lichtstrom, welcher die Lichtleiterplatte 1 lediglich auf ihrer Oberseite und ihrer Unterseite, nicht aber an ihren Kanten verlassen kann. Der Lichtstrom in der Lichtleiterplatte 1 wird somit in zwei Teillichtströme aufgespaltet, nämlich in einen Direktlichtstrom und in einen Indirektlichtstrom. Der Direktlichtstrom wird dabei in Richtung des Entblendungselements 2 auf der Unterseite der Lichtleiterplatte 1 ausgekoppelt. Der Indirektlichtstrom hingegen wird in Richtung des Diffusorelements 3 auf der Oberseite der Leuchte 1 ausgekoppelt. Bei der Auskopplung des Direktlichtstroms interagieren die Lichtstrahlen mit den Strukturelementen 7 auf der ersten Seite der Lichtleiterplatte 1 derart, dass eine vorteilhafte Lichtverteilung für den Direktlichtstrom und/oder ein vorteilhaftes Grössenverhältnis zwischen dem Direktlichtstrom und dem Indirektlichtstrom erreicht wird.

Der Direktlichtstrom durchstrahlt dann das Entblendungselement 2 mit seinen Entblendungsstrukturen. Ein Betrachter, welcher auf die Leuchte blickt, hat somit ein verringertes Blendrisiko, als wenn er direkt in die Lichtleiterplatte 1 blicken würde. Der Direktlichtstrom ist typischerweise geeignet, auf einer Arbeitsfläche bzw. auf mehreren Arbeitsflächen unterhalb der Leuchte 1 eine normgerechte Ausleuchtung zu gewährleisten.

Der Indirektlichtstrom durchstrahlt seinerseits das Diffusorelement 3, wobei das Diffusorelement 3 aus dem Indirektlichtstrom eine solche Lichtverteilung erzeugt, die die Raumdecke oberhalb der Leuchte 1 homogen ausleuchtet, insbesondere so, dass oberhalb der Leuchte keine dunklen Bereiche entstehen, welche von einem Rauminsassen als störend empfunden werden könnten.

Während des Betriebs der Leuchte L in den Leuchtdioden 6 entstehende Verlustwärme, welche typischerweise nicht in die Lichtleiterplatte 1 eingestrahlt wird, wird über die Kühlelemente 9 und speziell die mit der Raumluft in Kontakt stehenden Kühlrippen an die die Leuchte 1 umgebende Raumluft abgeführt. Dadurch wird der aus der Leuchte 1 austretende Gesamtlichtstrom auch bei längerem Betrieb der Leuchte 1 konstant gehalten und die Lebensdauer der Leuchtdioden 6 maximiert.

Die Lichtleiterplatte 1 ist bevorzugt aus Kunststoff, vorzugsweise PMMA, sie kann jedoch auch aus einem anderen Kunststoff oder aus Glas sein. Die Leuchtdioden 6 erzeugen typischerweise weisses Licht, wobei alle Leuchtdioden 6 typischerweise Licht mit im Wesentlichen gleicher Spektralverteilung erzeugen. Es ist jedoch auch möglich, dass die Leuchtdioden 6 Licht mit unterschiedlichen Spektralverteilungen erzeugen. So kann die Leuchte 1 beispielsweise sowohl warmweisse als auch kaltweisse Leuchtdioden 6 oder auch blaue, rote oder grüne Leuchtdioden 6 oder jedwede Kombination solcher Leuchtdioden 6 umfassen. Besonders vorteilhaft ist es, wenn die Leuchte 1 eine Steuereinheit umfasst und/oder mit einer Steuereinheit verbindbar ist, welche geeignet ist, z. B. den Gesamtlichtstrom der Leuchte 1 oder aber die resultierende spektrale Verteilung des von der Leuchte 1 erzeugten Lichts zu regulieren. Das Diffusorelement 3 ist bevorzugt aus Kunststoff, kann jedoch auch aus anderen Materialien wie z. B. Papier oder Metall oder Glas oder einer Kombination solcher Materialien bestehen. Solche Materialkombinationen sind prinzipiell auch für das Entblendungselement 2 möglich.

Die Erfindung ist nicht auf das hier beschriebene Ausführungsbeispiel beschränkt. Vielmehr wird der Schutzumfang durch die Patentansprüche bestimmt.

## Patentansprüche

1. Leuchte (L), insbesondere Pendelleuchte zur Beleuchtung von Arbeitsplätzen, umfassend
a) eine Leuchtdiode (6) und
b) eine Lichtleiterplatte (1), umfassend eine Kante geeignet zur Einkopplung eines Lichtstroms, der durch die Leuchtdiode (6) erzeugt wurde,
c) wobei die Lichtleiterplatte (1) eine Mehrzahl an Strukturelementen (7.1, 7.3) zur Erzeugung einer gewünschten Lichtverteilung umfasst,
**dadurch gekennzeichnet, dass**
d) die Leuchte (L) auf einer ersten Seite der Lichtleiterplatte (1) ein Entblendungselement (2) umfasst und
e) die Leuchte (L) auf einer zweiten Seite der Lichtleiterplatte (1) ein Diffusorelement (3) umfasst.

2. Leuchte (L) nach Anspruch 1, **dadurch gekennzeichnet, dass** zumindest eines der Strukturelemente (7.1, 7.3) halbkugelförmig ist.

3. Leuchte (L) nach einem der vorhergehenden Ansprüche, **dadurch gekennzeichnet, dass** zumindest eines der Strukturelemente (7.1, 7.3) kegelförmig ist.

4. Leuchte (L) nach einem der vorhergehenden Ansprüche, **dadurch gekennzeichnet, dass** zumindest eines der Strukturelemente (7.1, 7.3) pyramidenförmig ist.

5. Leuchte (L) nach einem der vorhergehenden Ansprüche, **dadurch gekennzeichnet, dass** zumindest eines der Strukturelemente (7.1, 7.3) prismenförmig ist.

6. Leuchte (L) nach einem der vorhergehenden Ansprüche, **dadurch gekennzeichnet, dass** das Entblendungselement (2) und/oder das Diffusorelement (3) im Wesentlichen plattenförmig ist.

7. Leuchte (L) nach einem der vorhergehenden Ansprüche, **dadurch gekennzeichnet, dass** zumindest eines der Strukturelemente (7.1, 7.3) auf der ersten Seite der Lichtleiterplatte (1) angeordnet ist.

8. Leuchte nach einem der vorhergehenden Ansprüche, **dadurch gekennzeichnet, dass** zumindest eines der Strukturelemente (7.1, 7.3) auf der zweiten Seite der Lichtleiterplatte (1) angeordnet ist.

9. Leuchte (L) nach einem der vorhergehenden Ansprüche, **dadurch gekennzeichnet, dass** zumindest eines der Strukturelemente (7.1, 7.3) eine offene Grundfläche umfasst, wobei eine Flächennormale der Grundfläche im Wesentlichen parallel zu einer Flächennormalen des Diffusorelements (3) und/oder im Wesentlichen parallel zu einer Flächennormalen des Entblendungselements (2) verläuft.

10. Leuchte (L) nach Anspruch 9, **dadurch gekennzeichnet, dass** die Grundfläche eine geometrische Fläche zwischen 10 µm² und 2500 mm² hat.

11. Leuchte (L) nach einem der vorhergehenden Ansprüche, **dadurch gekennzeichnet, dass** die Strukturelemente (7.1, 7.3) in einem gleichmässigen Gitter auf der Lichtleiterplatte (1) angeordnet sind.

12. Leuchte (L) nach einem der vorhergehenden Ansprüche, **dadurch gekennzeichnet, dass** zumindest zwei benachbarte Strukturelemente (7.1, 7.3) einen Abstand zwischen 0,1 mm und 10mm voneinander haben.

13. Leuchte (L) nach einem der vorhergehenden Ansprüche, **dadurch gekennzeichnet, dass** die Leuchte (L) ein Leuchtdiodenband (5) umfasst, welches seinerseits die Leuchtdiode (6) umfasst.

14. Leuchte (L) nach einem der vorhergehenden Ansprüche, **dadurch gekennzeichnet, dass** die Leuchte (L) auf einer der Kante abgewandten Seite der Leuchtdiode (L) einen Spiegel (8) umfasst, wobei der Spiegel (8) vorteilhafterweise zumindest teilweise gerundet ist.

15. Leuchte (L) nach einem der vorhergehenden Ansprüche, **dadurch gekennzeichnet, dass** das Entblendungselement (2) loch- und/oder rillenförmige Entblendungsstrukturen umfasst.

16. Leuchte (L) nach einem der vorhergehenden Ansprüche, **dadurch gekennzeichnet, dass** das Entblendungselement (2) und/oder das Diffusorelement (3) eine diffuse und/oder matte Oberfläche umfasst, wobei die Oberfläche vorzugsweise homogen diffus und/oder homogen matt ist.

17. Leuchte (L) nach einem der vorhergehenden Ansprüche, **dadurch gekennzeichnet, dass** die Leuchte (L) einen Trägerrahmen (4) mit jeweils einer Einschubnut für die Lichtleiterplatte (1) und das Entblendungselement (2) und das Diffusorelement (3) umfasst.

18. Leuchte (L) nach einem der vorhergehenden Ansprüche, **dadurch gekennzeichnet, dass** zwischen der Leichtleiterplatte (1) und dem Entblendungselement (2) und/oder zwischen der Lichtleiterplatte (1) und dem Diffusorelement (3) ein Luftspalt angeordnet ist.

19. Leuchte (L) nach einem der vorhergehenden Ansprüche, **dadurch gekennzeichnet, dass** die Leuchte (L) ein Kühlelement (9) zur Kühlung der Leuchtdiode (6) umfasst.

20. Verfahren zur Beleuchtung eines Raumes, mit den Schritten:
- Erzeugung eines Lichtstroms mit Hilfe einer Leuchtdiode (6),
- Zumindest teilweise Einkopplung des Lichtstroms in eine Kante einer im Wesentlichen horizontal orientierten Lichtleiterplatte (1),
- Auskopplung eines Direktlichtstroms aus einer Unterseite der Lichtleiterplatte (1) und eines Indirektlichtstroms aus einer Oberseite der Lichtleiterplatte (1), wobei der Direktlichtstrom und/oder der Indirektlichtstrom zumindest teilweise mit einem Strukturelement (7.1, 7.3) der Lichtleiterplatte (1) interagiert,
- Entblendung des Direktlichtstroms mit Hilfe eines Entblendungselements (2), so dass eine Blendgefahr für einen unterhalb des Entblendungselements (2) befindlichen Betrachter reduziert wird,
- Diffusion und/oder Homogenisierung des Indirektlichtstroms mit Hilfe eines Diffusorelements (3), so dass an einer Raumdecke oberhalb des Diffusorelements (3) eine möglichst homogene Leuchtdichteverteilung entsteht.
